# EUROPEAN PATENT APPLICATION

(11) **EP 2 034 251 A1**
(43) Date of publication of application: **11.03.2009**
(21) Application number: 07788610.9
(22) Date of filing: 18.06.2007
(51) Int. Cl.: F24J 2/38

(54) **SOLAR TRACKER WITH MOVEMENT IN TWO AXES AND ACTUATION IN ONLY ONE OF THEM**

(30) Priority: 19.06.2006 ES 200601645
(71) Applicant: Humanes Asensio, Jesus Angel, 34100 Saldana (Palencia) (ES); Lorenzana Iban, Antolin, 47195 Arroyo de la Encomienda Valladolid (ES)
(72) Inventor: Humanes Asensio, Jesus Angel, 34100 Saldana (Palencia) (ES); Lorenzana Iban, Antolin, 47195 Arroyo de la Encomienda Valladolid (ES)
(74) Representative: Carpintero Lopez, Francisco
(86) International application number: PCT/ES2007/000362
(87) International publication number: WO 2008/000867

(57) **Abstract**

According to Fig. 6, it consists of a solar tracking device with two axes of rotation, which is actuated only in one of them by virtue of the incorporation into the mechanism of a support bar of adjustable length (8), which is articulated at its two ends and anchored via one side to the body that tracks the sun (4) and via the other side to an adjustable support (5) joined to the base of the actual tracker or to the ground. In turn, the bar is equipped with a shock-absorbing spring system (10) that allows it to be operated as a dynamic control element for the whole assembly.

## Description

The present invention relates to a solar tracking device with two axes of rotation, which is actuated in only of them, by virtue of the incorporation into the mechanism of a support bar of adjustable length, which is articulated at its two ends and anchored at one side to the body carrying out the solar tracking, and at the other to an adjustable support joined to the base of the actual tracker or to the ground. In turn, the bar is equipped with a shock-absorbing spring system that allows it to be operated as a dynamic control element for the whole assembly.

### Background of the Invention

Solar tracking devices with two axes (orientation movement -tracking of the *azimuth-* and inclination movement - tracking of the *elevation*-) are known. These devices seek maximum energy collection from solar radiation by making the incidence of the solar rays be perpendicular throughout the day to the collection surface of the thermal or photovoltaic device.

The two rotations determining the orientation of the collection surface are carried out by means of two drive systems (they are normally geared motor, motorized screw, cable or lever system assemblies...).

Compared with a tracker system with only one axis, the tracker with two actuated axes is more expensive to construct and maintain and less reliable since it incorporates more elements that can break down. By introducing a restriction suitably linking the two rotations, the movement in the two axes can be achieved by means of actuating the tracker in only one axis. A mechanical configuration has been devised which allows carrying out this movement, the features of which configuration are object of the present invention.

### Description of the Invention

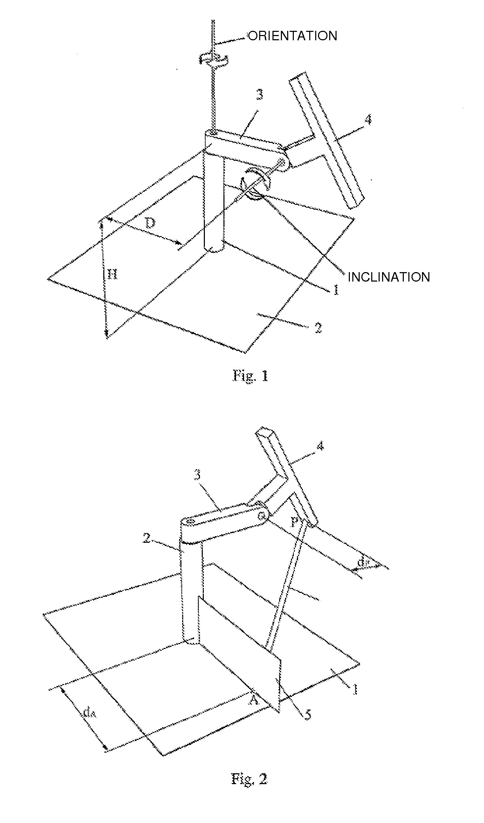

A solar tracking system with two axes is generically characterized by the position of the axes of rotation, as is described in Figure 1. The axis of rotation for the orientation movement is perpendicular to the ground plane and the axis of rotation for the inclination movement is parallel to the plane of the ground. The axes are not necessarily secant. Taking as a point of reference of the tracker the intersection of the axis of rotation for orientation with the plane of the ground (point O), the lengths determining the position of the axes are H and D, distances from the axis of rotation for inclination to the plane of the ground and to the axis of rotation for orientation, respectively. The body containing the tracking surface (4) thus rotates around the axis of inclination with respect to the body (3), which in turn rotates around the axis of orientation with respect to the base of the tracker (2), anchored to the ground (1).

As described in Figure 2:
- A point A, integral to the ground (1) or to the base of the tracker (2) indistinctly, separated a distance d_{A} from the axis of orientation, such that the plane that it defines next to the axis of orientation is the North-South plane (5) (henceforth N-S plane) is considered.
- A point P belonging to the body (4), separated a distance dp from the axis of inclination, and belonging to the plane containing the axis of orientation and perpendicular to the axis of inclination is considered.
- A joint between points A and P, by means of an arm (6) with length L, articulated at its two ends by means of lashings preventing the movements between the lashed bodies but not rotations (ball and socket or universal joint) is considered. Despite the oscillation of the shock-absorbing spring system, the variation in the length of the bar can be considered negligible averaged throughout the day.

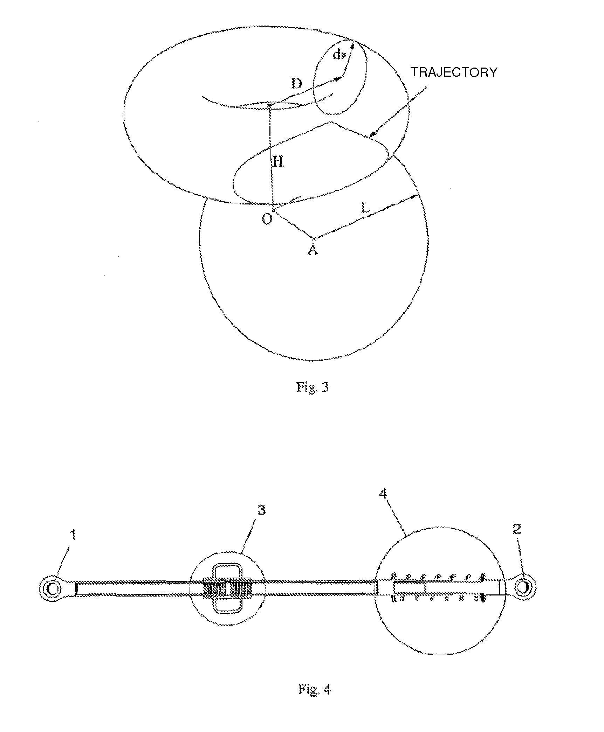

Under these premises, it can be geometrically deduced that the trajectory of point P is, as Figure 3 indicates, the intersection between the toroid centred in the axis of rotation for orientation, the centre of which is at a height H from the ground, with a toroid radius D and a section radius dp, and the sphere centred in point A of radius L. The trajectory of point P is symmetrical with respect to the N-S plane and the maximum height is reached when P coincides with the N-S plane (solar midday). It is thus achieved that the incidence of the solar rays is approximately perpendicular to the collection surface throughout the day. Its position will depend on the angle of orientation of the tracker (considered with respect to the N-S plane), and of the geometric variables and design of the system, in other words, H, D, d_{A}, dp and L.

The values of H and D will be fixed by the mechanical configuration of the tracker. If the value of dp is also fixed to place the support of the articulated arm in the most suitable place (coinciding with a bar or at a point where the robustness of the system is high), the position of the anchoring of point A, d_{A}, and the length of the bar, L, would be like design parameters. These two parameters will be calculated such that, for a certain period of the year (for example, summer solstice) the difference between the trajectory of the tracker and the solar trajectory is minimal. As the solar trajectory continuously varies throughout the year, the mechanism allows adjusting:
- The length of the bar which will allow, by adjusting the same to previously calculated positions, optimizing the trajectory of the tracker in all periods of the year.
- The distance d_{A} from the support, always placed on the N-S plane, to the axis of orientation will allow in the same way the trajectory of the tracker to be optimized.

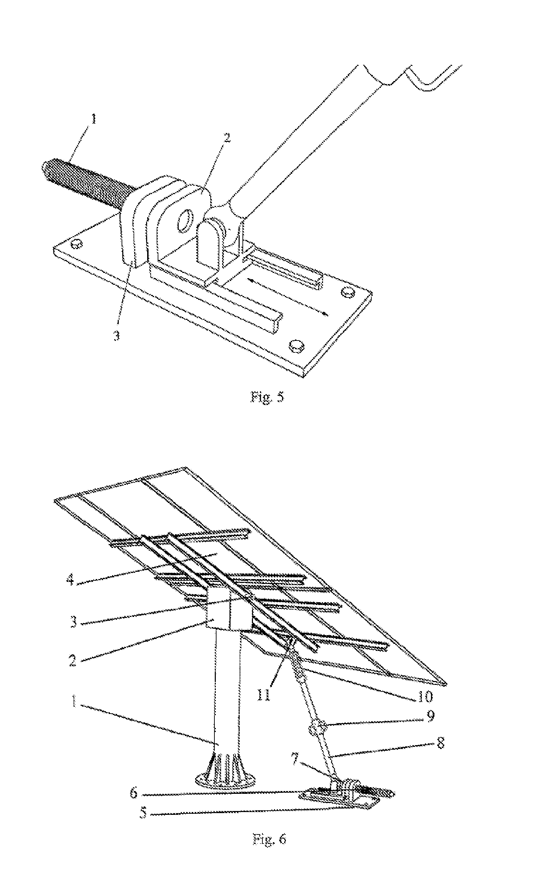

After the geometric description describing the operation of the invention, the details of the key elements are given: The bar of adjustable length and the adjustable anchorage support.
1. ARM OF ADJUSTABLE LENGTH: Figure 4 describes, only by way of example, the components of the arm in its most complex configuration. It is seen in the sectioned view that at the two ends it incorporates two ball and socket joints (1) and (2), restricting the translations between the lashed bodies, but not rotations. It also has a manually or automatically actuated mechanical, electrical, magnetic, hydraulic or pneumatic extension-compression mechanism (3). It furthermore incorporates a shock-absorbing spring system (4) responsible for attenuating both the forces that can act on the tracker at specific moments (gusts of wind) and for reducing vibrations and resonances to which the tracker might be exposed by external actions (for example, incidence of the wind). Simpler configurations not incorporating the elements for adjusting the length and/or suspension elements, depending on the features that the tracker is to have, can be chosen.
2. ADJUSTABLE ANCHORAGE SUPPORT: Figure 5 describes, only by way of example, the components of the support in its most complex configuration. It consists of a manually or automatically actuated mechanical, electrical, magnetic, hydraulic or pneumatic position adjustment device (1) of type. This device is responsible for varying the previously described distance d_{A} of the joining support of the arm (2), which moves with respect to the base of the assembly (3). This support can totally or partially house the ball and socket or universal joint with the arm. A simpler configuration where the support (2) is not adjustable and is directly anchored to the base of the tracker or to the ground, depending on the features that the tracker is to have, can be chosen.

### Brief Description of the Drawings

To better understand what has been described in the present specification, explanatory drawings described below are attached hereto.
- Figure 1 describes the movements of a generic solar tracker with two axes. The tracker is made up of a base (2) anchored to the ground (1).
   The orientation rotation is carried out by the intermediate body (3) with respect to the base (2). The inclination rotation is carried out by the body containing the collection surface (4) with respect to the intermediate body (3).
- Figure 2 describes the mechanical configuration of the invention. The orientation and inclination rotations are linked by means of introducing an articulated arm at the ends (6), joined to a point A integral to the ground (1) or to the base of the tracker (2), and to a point P, integral to the body containing the collection surface (4). Point A belongs to the North-South orientation plane (5) which, in turn, contains the axis of orientation. The distance from A to the axis (d_{A}) can be adjusted, as well as the length of the arm (6).
- Figure 3 describes the geometric deduction of the trajectory of point P, calculated as the intersection of a sphere of radius L (length of the arm), at a distance d_{A} from the origin of reference O, and a toroid aligned with O, parallel to the plane of the ground and at a distance H from the latter, with main radius D and radius of the section dp.
- Figure 4 describes, only by way of example, the arm of adjustable length. It incorporates at its ends two ball and socket or universal joints (1) (2), in the intermediate part a system for adjusting the length of the arm (3) and a shock-absorbing suspension spring system (4).
- Figure 5 describes, only by way of example, the adjustable anchorage support, integral to the ground or to the base of the tracker. It consists of an adjustment system (1) varying the position between the support (2) of the arm and the base.
- Figure 6 describes, only by way of example, a practical case for applying the invention in a solar tracker with two axes.

### Description of a Preferred Embodiment

As indicated in Figure 6, the solar tracker is made up of a base (1) on which there pivots a trunk (2) carrying out the orientation rotation by means of the actuation of a drive system. In turn, the structure (4) containing the collection elements pivots with respect to the trunk (2) around an axis (3).

A support formed by a fixed base (5) and a longitudinal adjustment system (6) responsible for varying the location of the fixing (7) of the support with the joint of the arm (8) is anchored to the floor.

The arm (8) incorporates a length adjustment system (9) by means of a double thread cylinder and a suspension system (10) formed by a spring and an absorber. The ends of the arm (8) incorporate ball and socket joints joining it with the fixing (7) of the support anchored to the ground and with the fixing (11) placed on the structure (4).

## Claims

1. Solar tracker with movement in two axes and actuation in only one of them, one of them perpendicular to the plane of the ground, called axis of orientation, and the other one parallel to the plane of the ground, and not necessarily secant with the first, called axis of inclination, incorporating a joint, by means of an arm with ball and socket or universal joints, placed at its ends between a support anchored to the base of the tracker or to the ground, and the body carrying out the inclination rotation.

2. Solar tracker with movement in two axes and actuation in only one of them according to claim 1, **characterized by** the fact of having in the support anchored to the base or to the ground a system for adjusting the distance of the joint of the arm to the axis of orientation, carrying out that adjustment by means of manually or automatically actuated mechanical, electrical, magnetic, hydraulic or pneumatic devices .

3. Solar tracker with movement in two axes and actuation in only one of them according to claim 1, **characterized by** the fact of having in the articulated arm a system for adjusting the length thereof, carrying out that adjustment by means of manually or automatically actuated mechanical, electrical, magnetic, hydraulic or pneumatic devices.

4. Solar tracker with movement in two axes and actuation in only one of them according to claim 1, **characterized by** the fact of having in the articulated arm a shock-absorbing suspension spring system.
